# EUROPEAN PATENT APPLICATION

(11) **EP 4 748 802 A1**
(43) Date of publication of application: **27.05.2026**
(21) Application number: 25213632.0
(22) Date of filing: 05.11.2025
(51) Int. Cl.: C02F 9/00, F25C 1/00, C02F 1/22, C02F 1/44, C02F 1/66, C02F 1/78

(54) **FUNCTIONAL ICE FORMATION PROCESS**

(30) Priority: 26.11.2024 IT 202400026592
(71) Applicant: Terminter S.r.l., 98044 San Filippo del Mela Messina (IT)
(72) Inventor: Interdonato, Orazio, 98049 VILLAFRANCA TIRRENA (ME) (IT)
(74) Representative: Lunati & Mazzoni S.r.L.

(57) **Abstract**

A functional ice formation process is provided comprising conveying water, defining its own concentration of calcium and/or magnesium carbonates, from a water network to a machine for making ice; freezing the water so as to obtain ice; refining the water, before or during the conveying, by reducing the concentration of the carbonates; and activating the water, following the refinement, by imparting antimicrobial capacity to the water by means of treatment with ozone and/or cold plasma; wherein the refinement comprises filtering the water to remove residual particles of predetermined size so as to clean the water; and enriching the water with an inert gas configured to dissolve in the water promoting the formation of bicarbonate ions to dissolve the carbonates, and inhibit the formation of calcium and/or magnesium bicarbonates.

## Description

The present invention relates to a functional ice formation process of the type specified in the preamble of the first claim.

**In** particular, the present invention relates to a process adapted to allow the obtaining of water that is not bacteriologically contaminated, for example in accordance with current regulations from an organoleptic, chemical and biological point of view, and having antimicrobial capacity prior to freezing into ice, so as to render the latter functional for application in the enrichment and preservation of food substances.

As is known, with the advance of summer, temperatures rise and each of us applies any possible system to find beneficial refreshment. **In** addition to the almost constant use of air conditioning systems and fans, many people try to cool food and beverages through the consumption of cold dishes and cold drinks. To achieve these results, ice is often used, for example for the cooling of fruit, beverages, or other items.

Edible or food-grade ice means the ice prepared with drinking water, therefore compliant in Italy with Legislative Decree 18/2023, which upon melting must turn into water having the same physico-chemical and microbiological characteristics as the drinking water used for its production. Food-grade ice therefore refers to that ice which may come into direct contact with foodstuffs and may thus be consumed; consequently, this ice is a foodstuff in all respects.

Food-grade ice can be used both in domestic environments and in public establishments such as restaurants, bars, pubs, hotels, fishmongers, or others that expect the presence of a public consuming ice.

The deterioration of foodstuffs is one of the most significant problems of the contemporary food industry. **It** is estimated that approximately 25% of food produced annually on a global scale is lost after harvesting or slaughtering due to microbial spoilage. Therefore, correct food preservation is fundamental in order to prevent spoilage, preserve intrinsic properties, and maintain freshness and nutritional value.

**In** this regard, refrigeration with ice is one of the most widely used methods for the preservation of food. The low storage temperature of perishable food products in fact causes a slowing of chemical reactions and of the proliferation of microorganisms to ensure the preservation of quality and microbiological safety thereof.

The cold chain plays a crucial role in the food industry, as it aims to prolong shelf life and preserve the freshness of foodstuffs. Ice is a common refrigerant that can be used, in addition to directly in contact with food and beverages (food-grade ice), to inhibit microbial growth and prolong the preservation of foodstuffs. Due to the direct contact with food, however, the microbiological safety of ice is receiving increasing attention, as numerous studies have confirmed the presence therein of various contaminating microorganisms.

Not surprisingly, microbial contamination of ice has frequently been reported; the cause of such events has been correlated to the quality of water sources and/or to contaminants present on the surface of raw foodstuffs. To prevent microbial contamination of ice, highly hygienic management is essential and the ice must be microbiologically and chemically safe because consumers either ingest it directly or ingest food that comes into direct contact therewith.

However, previous assessments on different applications, including processing (for example cooling during preparation), retail sale and catering, have shown that ice can also be a vehicle for the transmission of pathogenic microorganisms, which could be associated with the onset of foodborne illnesses and may present a considerable risk to public health.

Among the predominant and most common microorganisms found in ice are, in fact, Escherichia coli (indicator of faecal contamination), Salmonella spp., Clostridium perfringens (possible airborne contaminant), Pseudomonas spp., Staphylococcus aureus, and others; fungal contaminants include Candida spp., Aspergillus spp., Penicillium spp. and Cladosporium spp.

The concentrations of the reported microorganisms depend on the production conditions, i.e., domestic, catering, industrial and food service facilities, and on the form of the ice tested (for example freshly made, previously in contact with food products).

The sources of the previously reported ice contamination could be attributed to poor water quality, lack of hygiene during production (processing equipment, packaging materials), and the potable water network.

Recent studies have indicated that ice-making machines can be contaminated due to inoculations from the main water supply, faulty pipes allowing backflow from drains, and irregular cleaning of the ice-making machines. Once ice-making machines are contaminated, the ice produced tends to lack microbiological safety. To avoid contamination of microorganisms on the ice, it is therefore necessary that the incoming water is disinfected by treatments with chlorine, ozone and UVC radiation and so on. Therefore, it is essential that the ice is microbiologically and chemically safe.

To try to produce edible ice, two different technologies are usually employed: ozone treatment and plasma activation treatment.

Ozone treatment has become an advanced method for ensuring the microbiological safety of ice associated with foodstuffs. In general, the treatment of water with ozone is carried out using air or oxygen (O₂) as the feed gas through various technologies, such as corona discharge; the oxygen molecules decompose into oxygen atoms (O), which subsequently combine with other oxygen molecules to form ozone. Ozone has a broad spectrum of action against viruses, bacteria, biofilms and fungi and the existing scientific literature demonstrates the effectiveness of this gas both in ensuring the microbiological safety of ice, and in reducing the concentrations of microorganisms present in perishable foodstuffs compared with simple ice treatments.

Plasma technology has been recognised as a promising alternative to conventional sanitisation methods. Unlike solids, liquids and gases, plasma represents the fourth state of matter and is composed of ions, electrons and neutral particles.

Plasma can be divided into thermal plasma and non-thermal or cold plasma, depending on the type of energy supplied and the amount of energy transferred to the plasma. When heated to high temperatures or for other reasons, the outer electrons are released from the bond with the nucleus and become free electrons, a phenomenon called ionisation.

When it comes into contact with water, the gaseous plasma induces further reactions at the gas-liquid interface, giving rise to the formation of short-lived reactive species (such as OH) and long-lived stable species (such as H₂O₂, NO₂⁻, NO₃⁻) in the liquid, taking the name PAW (plasma-activated water).

In recent years, several studies have been conducted on the possibility of using plasma-activated water (PAW) for the decontamination of foodstuffs. It has thus been demonstrated that the reactive species produced through the use of this technology can be preserved more effectively by transforming the plasma water into ice form. The ice obtained from plasma-activated water, for example, has been successfully used to preserve fresh shrimp and extend its shelf life.

Despite the use of the different technologies, the known technique described overall comprises some significant drawbacks.

**In** particular, the water used to produce the ice may still be contaminated and have organoleptic characteristics that are entirely unsuitable for human use.

Therefore, existing technologies still offer reduced efficiency and do not allow for the extremely effective elimination of bacterial hazards while at the same time maintaining high usability of the water, especially in the form of ice.

**In** this situation, the technical task underlying the present invention is to devise a functional ice formation process capable of substantially overcoming at least part of the aforementioned drawbacks.

Within the scope of said technical task, an important object of the invention is to obtain a functional ice formation process that allows the obtaining of ice with high organoleptic properties and, at the same time, low if not null susceptibility to contamination.

Thus, another important object of the invention is to implement a functional ice formation process that allows the obtaining of highly safe ice to ensure its correct use by users.

**In** conclusion, a further object of the invention is to implement a functional ice formation process that is easily implementable by commercially known plants, requiring, in detail, the smallest possible number of modifications.

The technical task and the specified objects are achieved by a functional ice formation process as claimed in annexed claim 1.

Preferred technical solutions are highlighted in the dependent claims.

The characteristics and advantages of the invention are clarified below by the detailed description of preferred embodiments of the invention, with reference to the accompanying drawings, in which:

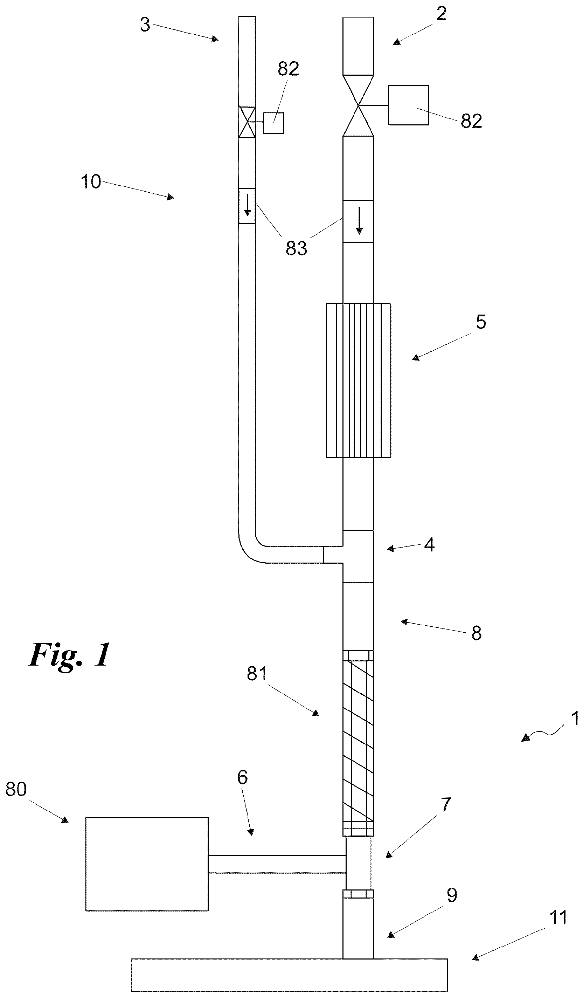

Figure 1 shows a simplified diagram of the conveying device of a plant implementing the functional ice formation process according to the invention.

**In** the present document, measurements, values, shapes and geometrical references (such as perpendicularity and parallelism), when associated with words such as "approximately" or other similar terms such as "almost" or "substantially", are to be understood as subject to measurement errors or inaccuracies due to production and/or manufacturing errors and, above all, as allowing a slight deviation from the value, measurement, shape or geometric reference to which they are associated. For example, such terms, if associated with a value, preferably indicate a deviation not exceeding 10% of the value itself.

Moreover, when used, terms such as "first", "second", "upper", "lower", "main" and "secondary" do not necessarily identify an order, a priority of relation or relative position, but may simply be used to more clearly distinguish between different components.

Unless otherwise specified, as evident from the following discussions, it is considered that terms such as "treatment", "informatics", "determination", "calculation", or similar, refer to the action and/or processes of a computer or similar electronic computing device that manipulates and/or transforms data represented as physical quantities, such as electronic magnitudes of registers of a computer system and/or memories into other data similarly represented as physical quantities within computer systems, registers or other storage, transmission or display devices of information.

The measurements and data reported herein are to be considered, unless otherwise indicated, as carried out in the International Standard Atmosphere ICAO (ISO 2533:1975).

With reference to the Figures, the plant for forming functional ice according to the invention is globally denoted by the number 1.

In broad terms, the plant 1 comprises a conveying device 10.

Furthermore, preferably, the plant 1 comprises a machine **11** for the making of ice. The device 10 is the portion of the plant preferably adapted to convey water to the machine 11 so that the latter may form ice.

The device 10, therefore, comprises at least a first inlet 2, a duct 8 and an outlet 9. The first inlet 2 is adapted to be placed in fluid passage connection with an external water network. The outlet 9 is, instead, in fluid passage connection with the machine 11.

The duct 8 connects the first inlet 2 to the outlet 9 in such a way that a fluid entering through the first inlet 2 can be conveyed to the outlet 9 via the duct 8.

Therefore, the machine 11 receives water from the external water network through the outlet 9 and following its transit through the device 10.

The latter also comprises a second inlet 3. The second inlet 3 is in fluid passage connection with the duct 8. In particular, the second inlet 3 and duct 8 are in fluid passage connection through a first connection 4. The first connection 4 is, for example, a common T-connection in which the fluid entering from the second inlet 3 can be introduced into the fluid entering from inlet 2.

In particular, preferably, the second inlet 3 is in fluid passage connection with a gas source. In particular, the latter is preferably an inert gas; thus, the inert gas is configured to dissolve in water.

The source may be, for example, a tank or also a gas generator.

Preferably, the device 10 comprises a filtration apparatus **5.**

The filtration apparatus 5 allows the filtering of the water so as to eliminate residual particles of predetermined size and clean the water as much as possible.

In particular, the filtration apparatus may be configured, as explained in greater detail below, to perform ultra-filtration and/or nanofiltration and/or reverse osmosis of the water.

The filtration apparatus 5, in any case, is advantageously upstream of the first connection 4.

This positioning allows the inert gas to be dissolved in the water following the filtration process thereof.

Therefore, the enrichment of the water with the inert gas is carried out on the filtered and cleaned water.

The device 10 further comprises a third inlet **6.**

The third inlet 6 is in fluid passage connection with the duct 8. In particular, the third inlet 6 and duct 8 are in fluid passage connection through a second connection 7. The second connection 7 is preferably downstream of the first connection 4. The second connection 7 is, for example, a common T-connection, more suitably the second connection 7 includes a venturi tube or connection. In particular, in the second connection 7 the fluid entering from the third inlet 6 can be introduced into the fluid arriving from the first connection 4.

In particular, preferably, the third inlet 6 is in fluid passage connection with a generator **80** selected from an ozone generator and a cold plasma generator.

Therefore, the ozone or cold plasma can come into contact with the water upstream of the outlet 9 so as to activate it, i.e., to impart antimicrobial capacity thereto.

The device 10 may comprise further components.

Preferably, the device 10 comprises a mixer 81.

The mixer 81 is configured to mix the inert gas and the water. Thus, the mixer 81 facilitates the dissolution of the gas in water, improving the enrichment process performed by the gas.

In addition, the device 10 may include further conventional elements adapted to regulate the circulation of fluids within the device 10.

In detail, the device may comprise one or more valves 82.

The valve 82 is an element that may, as known to the skilled person in the art, allow or obstruct the passage of a fluid.

Preferably, the device 10 comprises a valve 82 for one or more of the inlets 2, 3, 6 so as to allow or obstruct the entry of the respective fluids into the device 10. Furthermore, the device 10 could also comprise one or more backflow prevention components 83.

The backflow prevention component 83 may be integrated into, or implemented by, a valve 82. Alternatively, the component 83 may be separate from the valve 82. Similarly to the valves 82, the device 10 may comprise a backflow prevention component **83** for one or more of the inlets 2, 3, 6.

The operation of the plant 1 for forming functional ice previously described in structural terms is as follows.

Following the entry of fluids into the plant through inlets 2, 3, 6, the water is subjected to a refinement treatment, in detail before the mixing with inert gas and ozone or cold plasma, through the filtration apparatus 5.

The water arriving at the first connection 4 is then mixed with the inert gas, for example also by means of mixer 81, and finally sanitised by treatment with ozone or cold plasma.

As already anticipated, the invention comprises a new ice formation process.

The process comprises, in broad terms, at least one conveying step.

In the conveying step, the water is preferably conveyed from a water network towards a machine 11 for making ice. If the machine 11 is part of the plant 1, the water is conveyed from the water network to the machine 11. The water defines, naturally, its own concentration of calcium and/or magnesium carbonates.

Indeed, preferably, the water is drawn from a water network external to the plant 1 which may be subject to contamination due, for example, to the piping of the same water network.

The machine 11 for making ice is also preferably external to the plant 1, the latter mainly comprising the device 10, or the machine 11 could be part of the plant 1 in fluid passage connection with the device 10. It may, in fact, be any currently commercially available machine adapted to draw water from an external water network to allow freezing thereof and, thus, ice formation.

Indeed, the process preferably comprises a freezing step.

In the freezing step, the water is frozen so as to obtain ice. The latter may have any shape and size. It may be formed as nuggets, cubes, granular or flakes, it may be formed directly in a continuous process or also only formed from conventional ice trays wherein the water is placed inside cavities on a support normally made of plastic.

The process also comprises a refinement step.

The refinement step is advantageously carried out before or during the conveying.

This means that the water is refined before reaching the machine for forming ice. In the refinement step, in particular, the concentration of carbonates is reduced. To this end, in detail, the refinement step advantageously comprises at least one filtration step and one enrichment step.

In the filtration step, preferably, the water is filtered by removing residual particles of predetermined size so as to clean it as much as possible.

The filtration step may, therefore, be carried out in detail in various ways.

In a preferred embodiment, the filtration step is carried out by means of ultra-filtration.

In the ultra-filtration step, the water is filtered through a semipermeable membrane. In detail, the semipermeable membrane preferably includes pores having a diameter between 1 nm and 100 nm. Preferably, moreover, the ultra-filtration is carried out through a hollow fiber membrane. This means that, appropriately, the water passes through a duct equipped with thousands of small tubes or fibres with a hollow core (generally created using polymeric materials or ceramic compounds) which selectively remove particles from a liquid based on their size. The surfaces of the membranes have small pores that determine which particles may pass based on a molecular weight cut-off value. Typically, preferably, the water and small dissolved particles may pass through the membrane, while larger particles are retained and rejected.

When a fluid mixture is passed through these fibres, smaller molecules or particles may diffuse through the pores, while larger ones are retained inside the fibre. This separation process allows purification or concentration of the desired materials. Naturally, filtration may be carried out in different ways.

For example, the filtration may be carried out by means of nanofiltration.

Alternatively, the filtration may also be carried out by reverse osmosis. All the filtration technologies are, moreover, preferably alternative to one another, but may also be employed in combination, wholly or in part. Thus, the filtration may be carried out by means of ultra-filtration and/or nanofiltration and/or reverse osmosis. Preferably, the ultra-filtration is carried out by forcing said water through said membrane with a pressure gradient between 1 bar and 20 bar.

Even more in detail, preferably the pressure gradient is approximately equal to 15 bar.

The refinement further also comprises an enrichment step.

Preferably, the ultra-filtration is carried out before the enrichment so that, by intervening after the ultra-filtration, the enrichment allows to keep "clean" water already filtered.

The enrichment step comprises enriching the water with an inert gas. This means that, during the enrichment, a gas mixture interacts with the water.

The inert gas allows, therefore, to perform a "nobilitation" of the water, that is, advantageously, the inert gas is configured to dissolve in the water to promote the formation of bicarbonate ions.

The formation of bicarbonate ions has a dual advantage. Indeed, on the one hand, the bicarbonate ions imply, in their formation, that a dissolution action of the carbonates present in the water is promoted. Moreover, the formation of bicarbonate ions also inhibits the formation of calcium and/or magnesium bicarbonates.

More in detail, the enrichment acts on the transformation process of Calcium and Magnesium carbonates (solid phase) into bicarbonates (soluble in water) through the following reactions:

CaCO₃ (s) + CO₂(g) + H₂O (aq) <=> Ca(HCO₃)₂ (aq)

MgCO₃ (s) + CO₂(g) + H₂O (aq) <=> Mg(HCO₃)₂ (aq).

Indeed, considering Henry's law, which relates the solubility of a gas to its partial pressure and, in particular, according to which a gas is more soluble the higher the partial pressure it exerts, according to a proportionality constant known as Henry's constant C_{(gas)} = k_{(gas/solv)} * p(gas),

the principle underlying Henry's law is exploited in order to avoid the formation and precipitation of carbonate.

Appropriately, action is carried out on the equilibrium of bicarbonate formation by shifting it to the right (i.e., increasing the formation of products) by the common ion effect provided by the inert gas dissolved in solution. The concentration of the said gas to be introduced is, according to Henry's law, proportional to the pressure of the hydraulic circuit on which the device introducing inert gas into the water is installed. There thus exists a dynamic equilibrium relationship between the carbonates, the water and the carbon dioxide (CO₂), regulated by temperature, pressure, and pH of the solution, and omitting the notation of the ions (calcium or magnesium) since they do not take part in this reaction, the following is obtained:

CO (aq) + H O(I) + CO ²⁻(aq) <=> 2 HCO ⁻(aq)

On the right-hand side of this equilibrium is the bicarbonate ion, a species whose concentration is increased due to its high solubility in water which, also exploiting Le Chatelier's principle whereby when a system is disturbed by an external action, it reacts in such a way as to reduce or cancel the disturbance itself by re-establishing the equilibrium, by increasing the concentration of carbon dioxide in solution, in quantities according to Henry's law, the equilibrium of the above-described reaction is shifted to the right, thereby increasing the formation of bicarbonate ions and consequently inhibiting the precipitation of carbonate.

The functional ice formation process according to the invention therefore achieves important advantages.

Indeed, the functional ice formation process allows the obtaining of ice with high organoleptic properties and, at the same time, low if not null susceptibility to contamination.

Moreover, the functional ice formation process allows the obtaining of highly safe ice to ensure its correct use by users.

**In** conclusion, the functional ice formation process is easily implementable by currently known commercial plants, requiring, in detail, the smallest possible number of modifications.

The invention is susceptible to variants falling within the scope of the inventive concept defined by the claims.

Within this scope, all the details may be replaced by equivalent elements and the materials, shapes and dimensions may be any.

## Claims

1. Functional ice formation process comprising:
- conveying water, having its own concentration of calcium and/or magnesium carbonates, from a water network to a machine for making ice;
- freezing said water so as to obtain ice;
- refining said water, before or during said conveyance, reducing said concentration of said carbonates; and
- activating said water, following said refinement, by imparting antimicrobial capacity to said water by means of an ozone and/or cold plasma treatment;
and **characterised in that:**
- said refinement includes:
- filtering said water to remove residual particles of a predetermined size so as to clean said water; and
- enriching said water with a gas configured to dissolve in said water promoting the formation of bicarbonate ions to:
- dissolve and inhibit the formation of calcium and/or magnesium bicarbonates.

2. Process according to claim 1, wherein said filtration is carried out prior to said enrichment.

3. Process according to any of the preceding claims, wherein said filtration is accomplished by ultra-filtration through a semipermeable membrane including pores having a diameter between 1 nm and 100 nm.

4. Process according to the preceding claim, wherein said ultra-filtration is achieved through a hollow fiber membrane.

5. Process according to any of the preceding claims, wherein said filtration is accomplished by nanofiltration and/or reverse osmosis.

6. Process according to any of the preceding claims, wherein said filtration is accomplished by forcing said water through said membrane with a pressure gradient between 1 bar and 20 bar.

7. Plant (1) for forming functional ice comprising means for implementing a process according to any one of the preceding claims.

8. Plant (1) according to the preceding claim, comprising at least
- a machine (11) for the making of ice; and
- a conveying device (10) comprising:
- a first inlet (2) adapted to be placed in fluid passage connection with an external water network to receive said water,
- an outlet (9) in fluid passage connection with said machine (11),
- a duct (8) connecting said first inlet (2) and said outlet (9),
- a second inlet (3) in fluid passage connection with a source of inert gas and with said duct (8) through a first connection (4) such that said gas can dissolve in said water,
- a filtration apparatus (5) and configured to filter said water to remove residual particles of a predetermined size and clean said water, and
- a third inlet (6) in fluid passage connection with a generator (80) of ozone or cold plasma and with said duct (8) through a second connection (7) located downstream of said first connection (4).

9. Plant (1) according to any one of claims 7-8, wherein said filtration apparatus (5) is located upstream of said first connection (4).

10. Plant (1) according to any one of claims 7-9, wherein said device (10) further comprises a mixer (81) configured to mix said inert gas into said water, facilitating the dissolution of said inert gas in said water.
